# EUROPEAN PATENT APPLICATION

(11) **EP 0 709 854 A1**
(43) Date of publication of application: **01.05.1996**
(21) Application number: 94830499.3
(22) Date of filing: 26.10.1994
(51) Int. Cl.: G21C 1/00, G21C 17/108

(54) **Apparatus for monitoring the neutron flux generated in the core of a nuclear reactor**

(71) Applicant: FINMECCANICA S.p.A. AZIENDA ANSALDO, I-16128 Genova (IT)
(72) Inventor: Cai, Giulio, c/o Finmeccanica S.p.A., I-16128 Genova (IT)
(74) Representative: Falcetti, Carlo

(57) **Abstract**

Apparatus (10) for monitoring the neutron flux generated by the core (3) of a nuclear reactor (1), the core (3) of which is enclosed in a pressure vessel (2) which delimits the nuclear reactor (1), includes a plurality of solid-state detector elements (4) for detecting nuclear emissions arranged outside the vessel (2) and is able, at limited expense, to map the data from a large number of points at the same time while occupying a limited space.

## Description

The present invention relates to apparatus for monitoring the neutron flux generated in the core of a nuclear reactor. More particularly, the core is enclosed in a pressure vessel which delimits the nuclear reactor and which is substantially cylindrical in shape with an axis of symmetry.

In general, known types of apparatus for monitoring neutron flux include a plurality of elements for detecting nuclear emissions arranged outside the pressure vessel to detect the nuclear emissions from the vessel which are the result of the neutron flux associated with the nuclear fission reactions which produce the energy in the core.

From a measurement of the nuclear emissions, particularly the gamma radiation, it is possible, through established calculating processes, to derive the neutron flux and, hence, the thermal energy generated both locally and throughout the entire core of the nuclear reactor.

The nuclear emission detector elements used in the prior art are ionisation chambers. Such chambers comprise a receptacle containing gas subjected to a suitable potential difference by two or more electrodes. The incident nuclear emissions ionise the atoms of the gas in the chamber and the ions are collected by the respective electrodes and cause a current to flow which can be detected by a galvanometer. The magnitude of the current generated depends on the type and intensity of the incident nuclear emissions.

The ionisation chambers described above are located outside the pressure vessel in a zone corresponding to the position of the fuel in the core, which is substantially cylindrical and coaxial with the vessel.

More advanced versions of the monitoring apparatus include six ionisation chambers located on lines parallel to the axis of symmetry of the pressure vessel in each of its quadrants, there being a total of twenty four ionisation chambers.

There are, however, other versions of such apparatus in common use which employ a smaller number of detector elements, down to a minimum of two ionisation chambers per quadrant.

The purpose of this apparatus, even in its simplest form, is to determine, as precisely as possible, both the instantaneous power generated and the difference between the power generated at the upper and lower ends of the core.

This difference, if it exists, is caused, for example, by temperature gradients in the coolant in the cooling ducts in the core which differ from those envisaged during normal operation or, in the case of water-cooled nuclear reactors, by an abnormal distribution of the vacant portions of the ducts.

If this difference exceeds a critical safety value, it is necessary to activate control systems to interrupt the power supply. This operation is, however, very onerous and dangerous as regards the future operational capacity of the nuclear reactor.

A need is thus felt to obtain more refined information on the local generation of thermal energy in order to enable the reactor to be stopped only when it is actually necessary.

For example, in the case of water cooled and moderated reactors, greater refining of the information would enable two important operating parameters of the nuclear reactor core to be calculated, these being the linear thermal energy and the so-called DNBR (departure from nucleate boiling ratio). This latter figure is a parameter which indicates conditions in which boiling no longer occurs with the formation of surface bubbles within the cooling ducts of the core, but with the formation of a skin of vapour which adheres to the surface of the cladding of the fuel elements which make up the core, a situation in which there is danger of local overheating because of the reduced efficiency of heat exchange at the surface.

Ionisation chambers provide an overall measure of the nuclear emissions in the volume of the chambers traversed by the said emissions from the core and the data obtained are processed with the aid of Fourier series. It will readily be understood that an increase in the number of ionisation chambers beyond six would not bring significant increases in precision in the information required.

It is possible to achieve better precision only by changing the mathematical approach to the data available and by increasing significantly the number of elements used to detect the nuclear emissions.

It should, however, be remembered that ionisation chambers are generally bulky as well as very expensive and difficult to maintain and, hence, an increase in their number would have a significantly adverse effect on the building in which the pressure vessel is housed and also on the surface of the vessel itself. The main effect of this would be detrimental to the safety of the nuclear reactor in general in that the lack of space around the pressure vessel might limit the speed and efficiency of any action required to restore safe operating conditions in the event of an incident.

Thus, in order to achieve a significant improvement in the precision with which the information required can be determined, it is necessary to map data relating to nuclear emissions from the core with reference to a large number of individual points in correspondence with the core instead of with reference to a very limited number of substantial surface areas.

The technical problem which forms the basis of the present invention consists of making available apparatus for monitoring the neutron flux which overcomes the disadvantages mentioned above with reference to the prior art while simultaneously satisfying the said requirement.

This problem is solved by apparatus of the type specified, characterised in that it includes a plurality of solid-state elements for detecting nuclear emissions arranged outside the pressure vessel.

The main advantage of the apparatus of the invention lies in the fact that solid-state nuclear-emission detectors are small, cheap and easy to use so that it is possible to use a large quantity to obtain data mapping from a large number of points.

Further characteristics and advantages of the invention will become apparent from the description of the preferred embodiment given below by way of non-limitative example, with reference to the appended drawings in which:
Figure 1 is a partially-sectioned schematic front view of the apparatus for monitoring the neutron flux generated by the core of a nuclear reactor according to the invention;
Figure 2 is a schematic sectional view of an enlarged detail of a variant of the apparatus of Figure 1; and
Figure 3 is a schematic sectional view of the apparatus of Figure 1.

In the drawings a nuclear reactor is schematically indicated 1. It is defined and delimited by a pressure vessel 2 of cylindrical shape with a vertical axis of symmetry A.

This encloses a core 3 constituted by fuel elements 3a for generating power in the form of heat.

Outside the pressure vessel 2 there is apparatus 10 for monitoring the neutron flux generated by the core 3 of the nuclear reactor 1. It includes a plurality of solid-state nuclear-emission detector elements 4 which are arranged on a substantially cylindrical surface 5 concentric with the vessel 2.

In order better to define the positions of the solid-state detector elements 4 on the surface 5, it is possible to define a plurality of circles 6 on the said surface 5, each lying in a plane perpendicular to the axis of symmetry A of the pressure vessel 2. There are the same number of detector elements 4, arranged at regular intervals, on each circle so that the elements 4 on separate circles 6 form lines 7 parallel to the axis of symmetry A.

The apparatus 10 will thus have the same number of lines 7 as the number of nuclear-emission detector elements 4 on each circle 6.

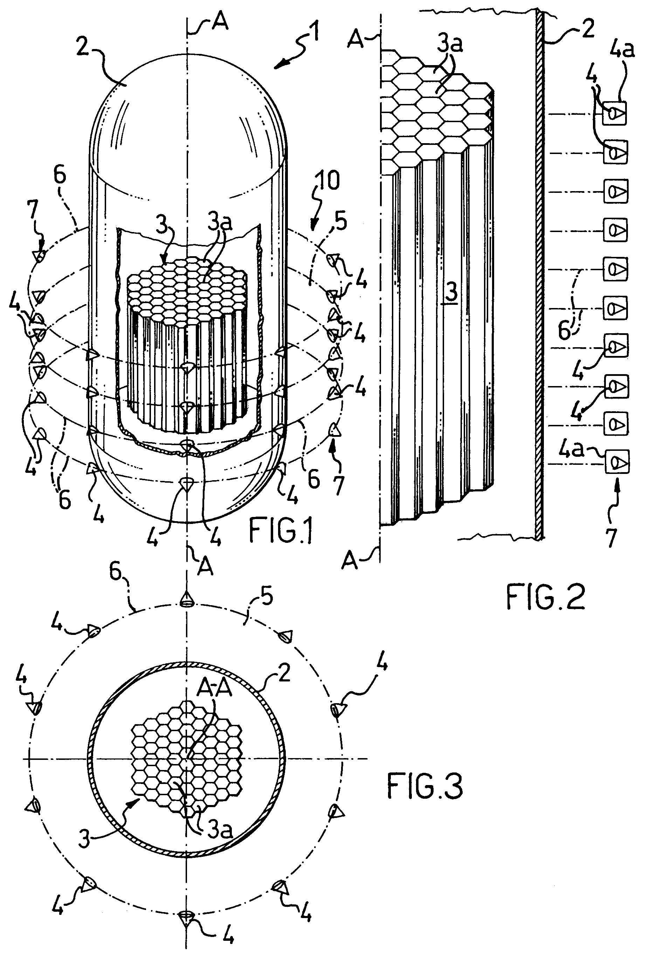

The circles 6 are suitably spaced from each other and suitably located relative to the core 3 of the nuclear reactor 1 (Figures 1 and 2).

The core 3 is the seat of nuclear fission reactions responsible for the generation of thermal energy, one product of the reactions being a neutron flux with which an emission of nuclear radiation is associated. More particularly, the gamma radiation, in this case conventionally termed n-gamma, is the most easy to measure as it is particularly penetrating and thus not subject to dispersion or attenuation.

Solid-state nuclear-emission detector elements 4, in themselves known, consist of pellets, conventionally termed wafers, of semi-conductive material, for example silicon, with opposite surfaces metallised to serve as electrodes. These wafers, when exposed to the nuclear emissions to be measured, are polarised electrically by the application of a predetermined potential difference to the electrodes. Without entering into detail about the mechanisms for the formation and migration of electric charges in semi-conductive wafers, these emissions cause a variation in the electrical conductivity of the wafer which results in a measurable signal constituted by the magnitude of the current through the wafer.

From this signal, suitably filtered and amplified, it is possible to calculate the intensity of the nuclear emissions and hence, by a known transformation function, the neutron flux.

The apparatus 10 includes a plurality of nuclear-emission detector elements 4 from which there is derived a uniform map of data relating to individual points on the surface 5. In fact the dimensions of the semi-conductor wafer are negligible compared with those of the core 3.

In order to enable the data available to be processed correctly, with a suitable mathematical model, the preferred version of the apparatus 10 which is the subject of the present description includes at least twenty circles 6 on each of which there are at least eight detector elements 4 so that there are eight lines 7 each including twenty detector elements 4.

To advantage the detector elements 4 are arranged to monitor gamma radiation.

In a variant of the apparatus 10 of the invention, each detector element 4 is arranged in a casing 4a of a material in which n-alpha-type interactions occur (Figure 3).

This material, when bombarded by a neutron flux, emits a corresponding flow of alpha particles which, as known, have little penetrating power and must therefore be detected close to the point of emission.

To advantage the material includes cadmium.

Thus the neutron flux emitted by the core 3 of the nuclear reactor 1 is not itself detectable by the solid-state detector elements but is monitored indirectly via the intensity of the alpha-particle emissions to which the neutron flux is linked through a known transformation function.

It is advantageous to provide detector elements 4 which can measure alpha-particle emissions.

With this variant of the apparatus 10, it is possible to determine the linear thermal energy in various zones of the core 3 with adequate precision. In the case of pressurised water reactors 1, it is also possible to obtain DNBR values to allow better control of the reactor itself.

These quantities are linked to the emission of nuclear radiation associated with the neutron flux emitted by the core 3, or with the neutron flux itself, through correlations which can be calculated since they depend on the geometry of the nuclear reactor 1 and of the monitoring apparatus 10.

In addition to calculating these quantities, it is possible to use the data obtained from the apparatus 10 to control the fuel elements and to measure the radiation doses which the personnel of the nuclear reactor 1 receive.

A further advantage of the apparatus 10 of the invention lies in the fact that the nuclear-emission detector elements 4 are easy to control, calibrate and replace in the case of breakdown.

To advantage it is possible to entrust the complete control of signals from the nuclear-emission detector elements 4 to a fully automatic processing system which is able to instigate safety procedures in the nuclear reactor 1.

It will be understood that the apparatus for detecting the neutron flux generated by the core of the nuclear reactor according to the invention can be modified in numerous ways by an expert in the art to satisfy particular requirements, all such modifications however being within the scope of protection of the invention as defined by the following claims.

## Claims

1. Apparatus (10) for monitoring the neutron flux generated by the core (3) of a nuclear reactor (1), the core (3) being enclosed in a pressure vessel (2) which delimits the nuclear reactor (1) and which is substantially cylindrical in shape and has an axis of symmetry (A), characterised in that it includes a plurality of solid-state, nuclear-emission detector elements (4) arranged outside the pressure vessel (2).

2. Apparatus (10) according to Claim 1, characterised in that the solid-state, nuclear-emission detector elements (4) are arranged to measure gamma radiation.

3. Apparatus (10) according to Claim 1, characterised in that each solid-state, nuclear-emission detector element (4) is located within a casing (4a) of a material in which n-alpha type interactions can occur.

4. Apparatus (10) according to Claim 3, characterised in that the solid-state nuclear-emission detector elements (4) are arranged to measure alpha-particle emissions.

5. Apparatus (10) according to Claim 3, characterised in that the material in which the n-alpha interactions occur comprises cadmium.

6. Apparatus (10) according to Claim 1, characterised in that the solid-state, nuclear-emission detector elements (4) are arranged on a substantially cylindrical surface (5) concentric with the vessel (2).

7. Apparatus (10) according to Claim 6, characterised in that the solid-state, nuclear-emission detector elements (4) are arranged on a plurality of circles (6) lying in planes perpendicular to the axis of symmetry (A) and on the said substantially cylindrical surface (5).

8. Apparatus (10) according to Claim 7, characterised in that there are the same number of solid-state, nuclear-emission detector elements (4) on each circle (6) and they are spaced at regular intervals.

9. Apparatus (10) according to Claim 8, characterised in that the solid-state, nuclear-emission detector elements (4) on the separate circles (6) are arranged in lines (7) parallel to the axis of symmetry (A).

10. Apparatus (10) according to claim 8, characterised in that there are at least eight solid-state nuclear-emission detector elements (4) on each circle (6).

11. Apparatus (10) according to Claim 9, characterised in that there are at least twenty solid-state, nuclear-emission detector elements (4) in each line (7).
